# EUROPEAN PATENT APPLICATION

(11) **EP 1 111 857 A2**
(43) Date of publication of application: **27.06.2001**
(21) Application number: 00127942.1
(22) Date of filing: 21.12.2000
(51) Int. Cl.: H04L 12/56, H04Q 11/04

(54) **Method and apparatus for cell buffer protection in the event of congestion**

(30) Priority: 22.12.1999 US 470498
(71) Applicant: Alcatel USA Sourcing, L.P., Plano, TX 75075 (US)
(72) Inventor: Jones, James W., Penngrove, California 94951 (US); Nelson, Michael, Rohnert Park, California 94928 (US)
(74) Representative: Dreiss, Fuhlendorf, Steimle & Becker

(57) **Abstract**

Buffer resources and VC's traversing an ATM network node are protected by a multilayer threshold for changing max buffer sizes. As global buffer resources are depleted, the pointer freelist for the buffer is depleted. A set of thresholds are set for the freelist. If the first freelist threshold is crossed, then the thresholds used on a per-flow basis are reduced by some percentage for all flows. The normal per-flow cell discard mechanism is thereby engaged for the flows that are most heavily using up the buffer resources. If congestion continues to increase and the second freelist threshold is crossed, then the thresholds used on a per-flow basis are reduced by some additional percentage for all flows. Eventually, as congestion is relieved, the freelist thresholds are crossed and the per-flow thresholds are restored to their original higher levels.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

This application is related to Jones et al., U.S. patent , , , U.S. patent application serial no. / , , entitled "A WEIGHTED ROUND ROBIN ENGINE USED IN SCHEDULING THE DISTRIBUTION OF ATM CELLS," attorney docket no. DSCC-01089 TAW/WSW, which is incorporated herein by reference, in its entirety.

### BACKGROUND OF THE INVENTION

### Field of the Invention

This invention relates to management of buffer memory. The invention is more particularly related to management of buffer memory in an ATM Fabric. The invention is also related to oversubscription and sharing of buffer resources between multiple channels in a communications network. The invention is also more particularly related to management of buffer resources allocated from a pool of available buffer (cell) memory by setting thresholds for each buffer based on a size of the available buffer (cell) memory pool.

### Discussion of the Background

VC Packets traveling on an ATM Fabric (or network) pass through may nodes, switches and other devices that route the packets over the specific VC established for those packets (a voice, video, or other channel, for example). VC's are typically assigned a priority or minimum bit rate that is guaranteed by the ATM Fabric (Constant Bit Rate -- CBR, for example). Other data traffic may be at an Unspecific Bit Rate (UBR) that sends data as bandwidth across the ATM is available, however, without any guarantee of throughput. When the packets are routed between nodes, the packets are temporarily stored at the node while addressing and timing for forwarding the stored packets is determined. Typically, the packets are stored in a buffer constructed of a memory device that keeps the packets in a First in First Out (FIFO), for example.

Each node in the ATM Fabric typically has multiple paths into and out of the node. Each path may support multiple VC's established between any two or more nodes of the fabric. Each VC established across the node is typically assigned its own buffer for temporary storage of packets traveling on the VC across the node.

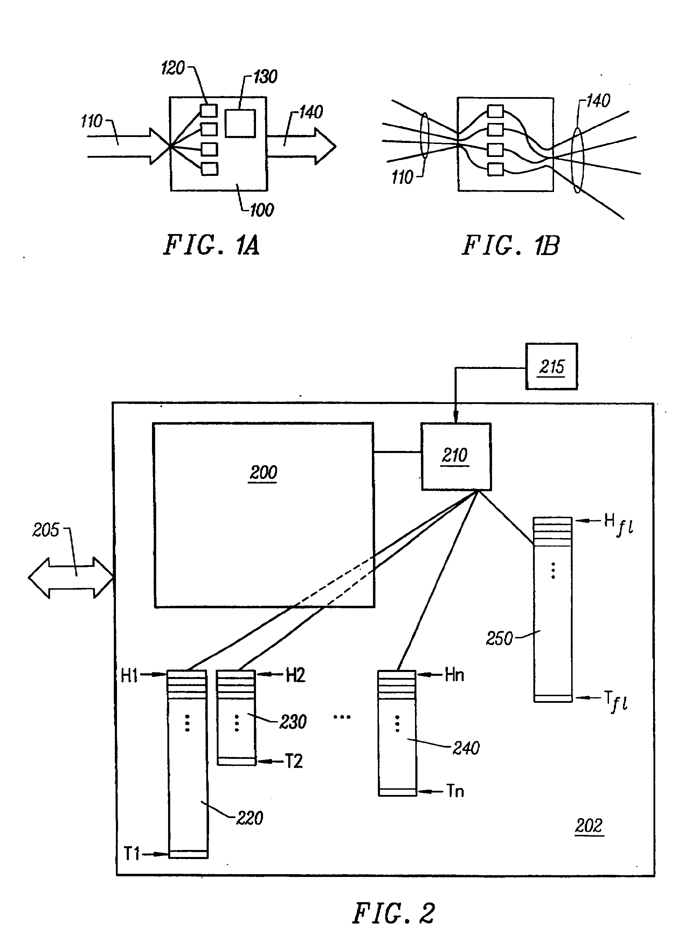

For example, referring to Fig. 1A, a node 100 of an ATM network is shown having incoming line(s) 110 and outgoing lines 140. The incoming lines may be a high bandwidth multiplexed line, or multiple lines. The incoming lines may have originated from multiple sources, are output from the node to any of other nodes or other destinations as illustrated in Fig. 1B. A controller 130 performs addressing of incoming packets, which is a process that identifies each incoming packet and determines a destination (routing) of each incoming packet. Each channel has a buffer 120 associated with it for storage of the incoming packets during the addressing process, and any other delays prior to outputting the packets toward their destinations (being released onto the ATM fabric or network).

However, several problems occur with a typical ATM buffer arrangement. In one example, channels having the highest amount of traffic may exhaust all available buffer memory space, causing incoming cells to be dropped. This occurs more frequently in the case of UBR channels, and during peak traffic intervals.

On the other hand, other channels, particularly channels having a specified CBR, will typically only utilize a small percentage of allocated buffer memory space, because packets received on a CBR channel are typically stored only for a short interval at the node before being released again onto the ATM Fabric. A CBR channel buffer might only store one or two packets, store them only just long enough to perform addressing and routing functions, and then release the packets. Therefore, memory space allocated or available for use by a CBR channel is likely to be underutilized during normal ATM operations.

### SUMMARY OF THE INVENTION

The present inventors have realized that the need to better arrange memory allocated for buffering in all types of multiple buffer systems. The present invention is a device that maintains a maximum buffer size for buffers, and reduces the maximum buffer size when an amount of memory available to the buffers (a freelist) drops below a predetermined threshold.

The invention may be embodied in an apparatus for managing buffers in a multiple channel node of a communications network, comprising, a memory pool comprising plural memory locations configured to store cells transmitted across said communications network, a set of buffers constructed from memory locations allocated from said memory pool, a buffer size device configured to maintain each buffer at a size less than a maximum buffer threshold value, and a threshold setting mechanism configured to set said maximum threshold value based on an amount of unused memory locations in said memory pool.

The invention may also be embodied in a method of managing memory space available to a set of buffers, comprising, a computer readable medium having instructions stored thereon that, when loaded into a computer, cause the computer to perform, the steps of setting a maximum buffer size that indicates a maximum amount of memory that may be utilized by each of said buffers wherein said maximum threshold, when applied across each buffer, represents an oversubscription of a memory pool available for use by said buffers, monitoring an amount of available memory in said memory pool, and reducing said maximum buffer size if the amount of available memory in said memory pool drops below a predetermined threshold.

The threshold of the invention may be a set of thresholds, the buffer size being reduced by each time an amount of available buffer memory drops below one of the thresholds.

By reducing the maximum buffer size, the present invention cuts back on memory pool usage from the buffers taking most of the space (UBR data, for example), and leaves intact buffered data that is utilizing less memory than specified by the maximum buffer size. With a set of thresholds for reducing the maximum buffer size, all but a lowest threshold of the set of thresholds may be an oversubscription to the available memory, thus allowing any of the buffers to use more than a fair share of available resources up to the maximum buffer size, thus providing for efficient and fair allocation of buffer resources.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a block diagram of a conventional ATM node;
Fig. 2 is a block diagram illustrating buffers constructed from a memory pool;
Fig. 3 is a block diagram of buffers and a freelist of a memory pool according to the present invention;
Fig. 4 is a block diagram of a network device for routing virtual channels in an ATM network; and
Fig. 5 is an example of a set of flow ID queues, a freelist, and thresholds for reducing max queue sizes.

### DESCRIPTION OF THE PREFERRED EMBODIMENTS

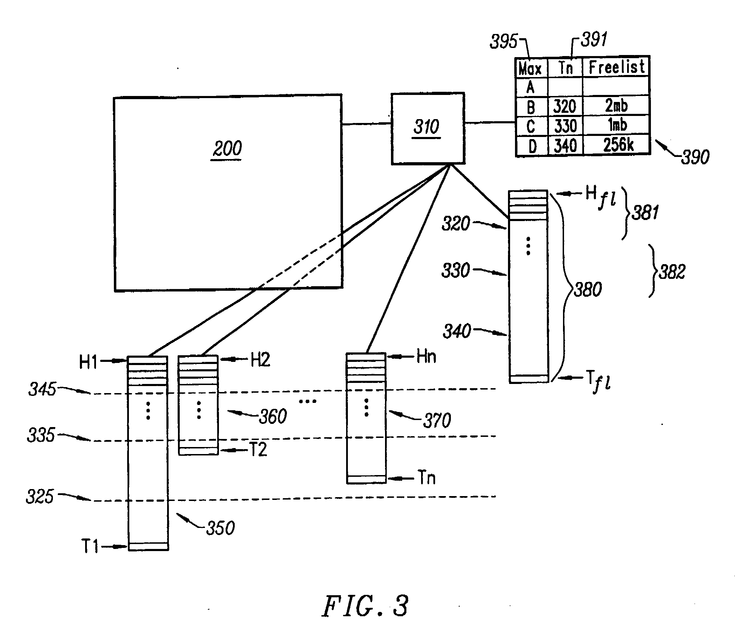

Referring again to the drawings, wherein like reference numerals designate identical or corresponding parts, and more particularly to Fig. 2 thereof, is a block diagram of components of a buffering system maintained in a node of a multi channel network device 202. The buffering system includes a memory pool 200 and plural incoming and outgoing channels 205. The memory pool 200 is a pool of available memory from which the buffering system may draw upon to construct buffers for the various channels that utilize the network device 202. The network device is typically a routing node that receives data packets, cells, or other types of data as an intermediary that identifies a destination of the data packet, performs an addressing function on the packet, and sends it to the destination. However, other functions may also be performed by the network device. The buffering process itself gives time for processes of functions such as addressing to be performed, and to store data until bandwidth is available for sending the data back onto the network.

A memory controller 210 is a computing or electronic mechanism that allocates and controls the use of memory locations from the memory pool 200. Many different configurations of buffers may be constructed by the memory controller 210 using memory locations from the memory pool 200. For example, buffers may be constructed as Q's, linked lists, or other structures suitable for storage of data passed on the channels. In one embodiment, the memory controller is to be implemented as software for maintaining a structure utilized for temporary storage (buffering) of data that is passed on any of the channels. Alternatively, electronic components may be connected as a control device to construct and maintain the storage of data passed on the channels. The data itself may be of any format ATM, TCP/IP, X.25, X.400, or data in any format that can be propagated between nodes of a network.

In one embodiment, the structure for buffering data passed on the channels is a linked list. The memory controller 210 maintains a linked list for each of n channels supported by the buffering system. One way of providing memory for each the n buffers is to divide the available memory (divide the memory pool 200) between each of the channels. For example, an amount of memory (mem) contained in the memory pool would be divided (mem/n), and mem/n memory locations would be provided to each of n buffers (or the nearest whole number division of the memory pool).

In a more advanced embodiment, a freelist 250 is maintained by the memory controller 210, and memory locations from the memory pool are allocated to each buffer as they are needed. This arrangement allows for channels needing greater buffer space due to lower throughput (bit rates) or greater volume traffic to utilize additional memory space as needed. In this embodiment, the memory controller would also arrange for garbage collection by releasing any memory locations no longer utilized by a particular buffer. Released memory locations would be available for re-allocation to the same or other buffers as needed. For illustrative purposes, Fig. 2 shows buffers 220, 230, and 240, each having different amounts of buffer space and corresponding to different channels of data traveling across the network device 202.

In this embodiment, the memory pool is efficiently allocated because memory locations are used only if needed, and then released (returned) to the memory pool after use. Returning a memory location to the memory pool comprises placing a pointer to the location being returned onto the freelist.

The above arrangement is also flexible in that new channels may be established, and then memory space may be allocated from the memory pool for buffering the new channels. For example, and outside device 215 may notify the controller of the particulars (channel ID, data rates, etc, all info needed for establishing a channel buffer) of a newly established channel, and the controller can then set up an additional linked list (or other structure) for buffering data passed on the new channel(s).

The memory controller 210 may also govern a maximum size of the buffers utilized by a buffering device. As in the previously described embodiments, buffers are established and memory locations are allocated as needed to buffer data traveling across an associated network node.

However, each buffer is provided with an initial maximum (max) size. Once the memory locations of a predetermined size buffer buffering device are full (reach the max size), no more data can be buffered until some memory locations are released by the full buffer. This is inefficient because while some buffers may be forced to drop data since their buffers are full, other buffers may have used allocations of buffer space because data traffic/volume on the associated channels does not require all their available buffer space.

In another embodiment, memory locations are allocated as needed to specific buffers without regard to a max size. The memory space is efficiently allocated, however, once all the memory locations in the memory pool are utilized, no additional data may be buffered on any of the channels until some memory locations are released (returned to the freelist). Therefore, even with efficient allocation of memories to buffers, data on any or all of the channels may be randomly (ungracefully) dropped.

Fig. 3 illustrates a buffering system for a network node that both efficiently allocates memory and insures that, in the event of congestion, cells are only dropped from the channels utilizing the largest amount of memory resources. The system utilizes linked lists as a buffer structure (see linked lists 350, 360, ... n 370). Each linked list has a head H1..Hn, and a Tail T1..Tn, which are created, updated, and maintained (create list, add to list, remove from list, etc.) by a memory controller 310. The memory controller 310 also maintains a freelist 380 that comprises a list of memory space available from the memory pool 200. As discussed above, other structures or types of linked lists may be utilized for the buffers.

The memory controller 310 also has access to a set of thresholds (320, 330, and 340), which indicate both threshold amounts of available free space 391 of the memory pool 200 (which is determined by size of the free list 380), and a maximum buffer size 395 for each of the buffers at each threshold. In this example, 3 thresholds are specified, however, any number of thresholds may be utilized. The threshold amounts are applied against the freelist 380, and the buffers are set to a maximum size (by the memory controller 310) corresponding to a last threshold crossed.

For example, when the freelist indicates more available memory than a first threshold 320, the buffer sizes are not limited by a maximum buffer size. In this case, any one buffer would appear to be free to utilize the entire memory pool if needed (assuming the entire memory pool was available). In another embodiment, a maximum buffer size may be imposed on the buffers such that no one buffer would be permitted to consume the entire memory. However, in either embodiment, for efficient use of memory resources, the first maximum buffer size imposed on the buffers would represent an over subscription of the memory resources. An oversubscription of memory resources indicates that the number of buffers x the max buffer size (#buffs^{*}max buff_size) sis an amount greater than the entire memory pool. Oversubscription allows any one buffer to utilize more than its "fair share" of memory resources, if needed.

Furthermore, in either embodiment, before the entire memory resources are allocated, at least a first threshold is crossed. In the example of Fig. 3, pointers to available memory locations are added and removed from a head of the freelist H_{fl}, and the first freelist threshold to be crossed is threshold 310. Upon crossing the first threshold 320, the memory controller 310 imposes a maximum buffer size (in this example, MAX BUFFER = B). Since additional thresholds exists (330, and 340), MAX BUFFER = B may also represent an over-subscription of the memory resources. In other embodiments, MAX BUFFER SIZE = B might not be an over-subscription of memory resources. The result of imposing the maximum buffer size of B is to drop data from buffers utilizing the greatest amount of memory space (buffers using more than B locations), and thereby providing for a more equal distribution of buffer resources.

In the example of Fig. 3, buffers 1..n, labeled 350, 360, ... 370 are in use. Dashed lines 325, 335, and 345 represent approximated values for the buffer sizes corresponding to each threshold (320/325, 330/335, and 340/345). When the first threshold 320 of the freelist is crossed, a maximum buffer size of B is imposed on all buffers. As illustrated in Fig. 3, this maximum buffer size (325) has no effect on buffers 360..370. However, buffer 350 is shown as using more memory space than the threshold 325, and will therefore be forced to release memory space back to the memory pool (placed back on the freelist), making the released memory available to other buffers.

Forced release of memory from a buffer to a memory pool does cause data in the buffering system to be dropped. However, by dropping data from the buffers most heavily using memory resources, it allows other, less memory consuming channels to continue operating freely, and it should be noted that data is only dropped from the channels consuming the most resources. Therefore, cells are gracefully dropped because they are removed from channel buffers identified as causing the most congestion.

Thus, after crossing threshold 320 (memory area 382), the maximum buffer size is established as B. B, as discussed above, may represent an over-subscription of memory resources. Alternatively, B may be any other amount that would fairly and efficiently distribute memory resources to each buffer.

As the buffers continue to fill and use more memory pool resources, the freelist also reduces in size (indicating less memory locations available from the memory pool 200). When the freelist crosses a second threshold 330 (1 MB as illustrated in Fig.3, however, any appropriate size may be selected), the MAX Buffer size is again reduced, in this example to C. Like max buffer size B, max buffer size C may represent an over-subscription of memory resources, or any amount that would fairly and efficiently distribute memory resources to each buffer. As shown in Fig. 3, threshold 330 and corresponding maximum buffer size C, illustrated as dotted line 335, imposes a constraint on each of the buffers 350, 360, and 370. Therefore, each of buffers 350, 360, and 370 will be required to drop cells until they are equal or less than C (other buffers, not shown, may or may not be affected, depending on the amount of resources utilized in each buffer).

A final threshold 340, and corresponding maximum buffer size D (dotted line 345), are crossed and imposed when buffer resources from each of the buffers are using resources to an extent that the freelist indicates less than threshold 340 of memory is available. In one embodiment, the last maximum buffer size does not represent an over-subscription of the memory pool, but instead represents a full subscription. Alternatively, less than a full subscription of the memory pool may be represented by the last max buffer size. A less than full subscription of the memory pool would provide a max amount of memory locations for each buffer, plus some spare memory for interim operations needed for maintaining each list.

Table 390 illustrates some example values for a hypothetical memory pool. A maximum value of A imposed on each buffer when memory resources are not being fully used. As the free list drops to 2 MB, a smaller maximum buffer size B is imposed. As the freelist drops to 1 MB, a still smaller maximum buffer size of C is imposed. When the freelist drops to 256k available memory locations, the maximum buffer size is again reduced to D, which, in one embodiment, allows, at most, a full subscription of the memory pool. Depending on the anticipated demands, and other traffic and routing factors, the last maximum buffer size may still represent an over-subscription of memory resources, however, such an implementation, without other constraints imposed, runs the risk of using all available memory and dropping incoming data in an ungraceful manner.

A reverse operation is employed as more memory resources are freed and made available to other buffers. As available memory as indicated on the freelist increases and each threshold is crossed in the reverse direction, the maximum buffer sizes are allowed to increase. In one embodiment, the threshold values may be increased or placed in different locations as additional resources are made available (added to the freelist), thereby providing a hysteresis so that if buffer resources hover near a specific threshold, the maximum buffer size is not continually updated (flip-flopping back and forth, first over the threshold, then under the threshold, then back over the threshold ..., etc).

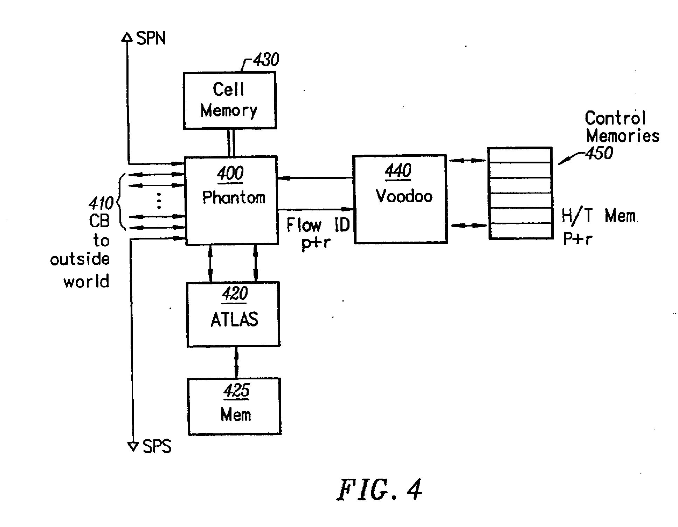

Fig. 4 is a block diagram of components of a network device utilized in the receipt and distribution of ATM cells in an ATM network. Similar components may be utilized in other types of networks. A phantom device 400 is connected, via a channel bank 410, to multiple connections of the outside world. These connections receive and transmit ATM Traffic of various types that will be routed through the network device. The network device, also referred to as a stack plane, may be connected to other network devices via connections SPN and SPS (Stack plane north, and stack plane south). The cell buses are then attached to line cards and other devices (not shown) that interface to the external world.

Included in the network device are an atlas mechanism 420 that translates VPVC's (Virtual Path/Virtual Channel Identifiers) to flow ID's. Flow ID's are utilized to identify VC's (Virtual Channels) and associated buffers within the network devices. An attached memory 425 provides memory needed by the atlas 420 for performing translation functions. Also attached to the phantom 400 is a cell memory 430 for storage of ATM cells, and a voodoo 440. The voodoo 440 is responsible for maintaining buffers for each of the flows (virtual channels) that traverse the network device. The voodoo 440 utilizes control memories 450 to identify and maintain buffers for each of the flows.

Data flow through the system of Fig. 4, beginning with ATM cells entering from the external world through the line cards and other interfaces, begins by traveling along any one of the lines in cell bus 410 to the phantom 400. Cells entering the phantom 400 are then routed to the atlas device 420 (in some cases data entering a phantom via the cell buses may not need to be routed through the atlas 420 if, for example, the new data entering the phantom had passed through an atlas device previously (such as the atlas associated with SPN, or SPS, for example)). When the new data is passed through the atlas device 420, the address of the ATM cell (the VPVC) is changed to a flow identifier. Basically, the atlas 420 does a header translation from the ATM VPVC to a flow ID. In one embodiment, the flow ID is a 16-bit field.

With a 16-bit field, the flow ID is capable of identifying 64K different connections to the phantom 400. Therefore, within the network device each ATM cell will be identified based on a flow ID. However, each of the processes of the present invention may be performed using other identifiers rather than a newly added flow ID. For example, any identifier that uniquely identifies a flow may be utilized. Therefore, the invention should not be limited to the specifics of this example implementation based on translated flow ID's.

After the ATM header has been translated to a flow ID, the cell is routed back up to the phantom 400 and the phantom stores the cell in a memory location of the cell memory 430. The phantom 400 then sends the flow ID and a pointer to the stored ATM cell to the voodoo device 440. The voodoo will already have a particular queue associated with the flow ID, the queue essentially being a link list of pointers for the cells that have come in for that flow ID. Again, although link lists are utilized, other data structures or methods of maintaining any particular buffer or queue may be utilized.

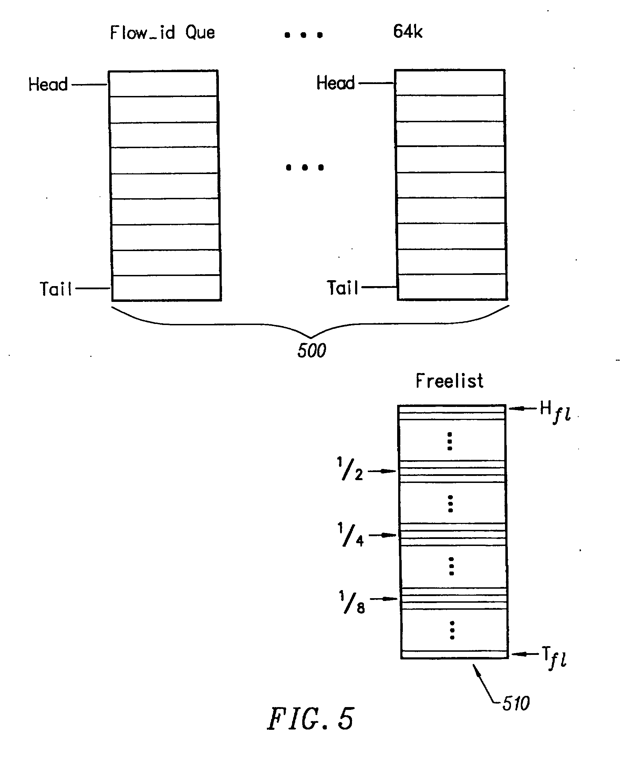

Therefore, since each flow ID corresponds to a VPVC, each queue maintained by the voodoo is a VCQ. Fig. 5 illustrates a set of linked lists (queues) 500 maintained by the voodoo device for each flow ID.

The control memories 450 maintain data specifically related to the data structure storing pointers for each queue, for example, a head pointer and a tail pointer for each queue. The voodoo 440 manages each of the queues, for example, new cells coming in to a queue may be added to the head of the list, and as cells are sent out they may be removed from the head of the list. Any alternative structure may also be utilized, providing that thresholds and other operations are also maintained consistent with the operations described herein, which will be apparent to those skilled in the art in light of the present disclosure.

When bandwidth is available to send cells out from the network device, a scheduler (not shown) will transmit a particular flow ID telling a queuing controller (part of the voodoo which maintains the queues) that a next cell, or cells, needs to be taken off the queue for the particular flow ID and sent it out. Pointers to the next cell and/or cells are then removed from the appropriate flow ID queue by the voodoo and sent back to the phantom. The phantom will utilize the pointers and retrieve the cells as stored in the cell memory 430 and send the cells out via the atlas 420. The atlas 420 performs an outgoing translation on the flow ID to a VPVC for the now outgoing cell. The outgoing cell is sent out visa the cell bus 410 attached to phantom 400.

Using control memories 450, the voodoo also maintains a freelist 510 of available cell memory 430. The voodoo also sends pointers to the phantom 400 identifying which cell memories are available for storage of cells. In one embodiment, the phantom maintains a short list of free pointers it can use for new cells, and each time a new cell is stored, a pointer is removed from the short list and utilized to store the new cell in cell memory 430. On a periodic basis, the voodoo 440 provides additional sets of available memory space that is added to the short list of free space on the phantom.

Therefore, the network device shown in Fig. 4 has the capability to maintain 64,000 virtual channels and has expansion capability via SPN and SPS to stack similar network devices for additional connections. However, the queues are limited in size to that available in the cell memory 430. In addition, as with the previously described buffering devices, less cell memory is needed if allocation of memory to each of the flow ID buffers is performed efficiently. Therefore, the present invention is performed by the voodoo in managing each of the flow ID queues, therefore, providing efficient buffer cell memory allocations, and keeping cell memory usage within any physical memory limitations of the cell memory 430.

In the embodiment of Fig. 4, memory management is considered more important because when cells are utilized, it takes additional memory space to provide pointers for each of the cells. In one embodiment, the present invention is implemented with a cell memory of 128K in size. Although additional cell memory is provided in further embodiments, it is clearly seen that the cell memory 430 is a resource that needs to be protected because as 64,000 different keys start filling up, at some point the cell memory may be used up, and it is undesirable to just let the cell buffers overflow and have cells dropped ungracefully.

Initially, each queue may have a maximum depth (max buffer size) of 9 or 10, for example. This maximum threshold is set up such that if a queue maintains more items than the maximum threshold or attempts to store additional items beyond the maximum threshold, cells will begin to be discarded. Therefore, there is an absolute limit placed on how big a particular queue can get before cells begin to be discarded. In another embodiment, a threshold is maintained for each queue identifying a point where cells would start to be marked instead of discarded. By marking the cells instead of discarding them it tells systems further on down the line that things are getting tight, cells are not yet being discarded, but system resources are beginning to be taxed.

The maximum depths, or buffer sizes, if added up for each of the 64K queues, would result in an oversubscription of the memory resources of cell memory 430. An oversubscription is acceptable because, at any one particular time some channels will not be utilized or not fully utilized, and, in normal traffic flow there will be many no-shows, and a statistical multiplexing of the data traffic will even out to a predictable pattern, thus allowing some channels to utilize greater amounts of buffer resources (cell memory) while traffic is light on other channels.

In any event, an absolute maximum on buffer size is a protection mechanism that will be implemented to protect against any particular flows that for some reason just begin accumulating large quantities of cells at a fast rate. The absolute maximum places a limit on how big the queue will get before cells will be discarded, and therefore protecting the other queues.

However, oversubscription, even with the maximum thresholds, another layer of protection is needed because it is possible that all the queues could be filled to somewhere before their maximum thresholds, but that still adds up to a sum of memory that may be greater than the available cell memory 430. In that case, incoming cells will be lost because there are no free pointers for the phantom to store the new cell at in the cell memory 430. This results in losing cells in an ungraceful way, as opposed to managing how cells are discarded.

To prevent the above scenario, additional thresholds are maintained and compared against the freelist 510 by the voodoo. The free list is a set of pointers pointing to available memory locations in the cell memory 430. Each time a new cell enters from the fabric, a pointer is taken from the free list and the entering cell is stored at the memory location pointed to by the pointer removed from the free list. Each time a cell is emitted onto the fabric from the cell memory, a pointer to the memory location where the emitted cell was stored is placed back onto the free list. Any type of management system may be utilized by the voodoo and the phantom for maintaining the free list and placing cells at and removing cells from free list pointer positions. As discussed above, in one embodiment, a short list is maintained at the phantom for placement of incoming ATM cells, or alternatively, all cells could be maintained strictly by the free list managed by the voodoo.

The additional thresholds are then applied against the free list of available cell memory locations. As cell resources begin to be depleted, the free list gets shorter and shorter, and a first threshold is crossed. Upon crossing the first threshold, the maximum thresholds of each buffer are cut in half, and each queue having more than the new maximum threshold begins discarding cells. Therefore, each queue utilizing large amounts of system resources (more than the new max buffer size) will begin discarding their cells, and this discarding continues until each queue is below the new maximum buffer size.

If the system still continues to deplete resources, and the free list continues to shrink, a next threshold is then crossed and the maximum buffer size is again halved. At this point the max buffer size is one quarter the original maximum buffer size. And again, each buffer (queue) utilizing more memory cells than the new maximum buffer size begins discarding cells.

Finally, as system resources continue to be depleted and the free list crosses the final (third) threshold, the maximum buffer size is cut in half again. In this scheme, the maximum buffer sizes are initially set at a value, cut in half, then to a quarter and then to an eighth, by continually being cut in one half from its previous maximum queue value. Alternatively, any mathematical formula or set of preselected values may be utilized to determine a max buffer size for any set of thresholds.

The values of the absolute maximum threshold and any subsequent thresholds and/or an amount each subsequent threshold cuts the maximum buffer value, as with each of the buffer management and free list management functions of the voodoo, are programmed in software. Alternatively, electronic components may be arranged to provide the same thresholds and max buffer values. Therefore, any values that may be specifically useful for a specific implementation may be programmed into that software or provided via electronics.

One, two, three, or more thresholds may be utilized. At a final threshold, the buffer resources may or may not still be oversubscribed to the cell memory 430. In one embodiment, the cell memory is a full subscription at the final threshold. In another embodiment, the final threshold still represents an oversubscription of cell memory. However, overbooking the final threshold would still run the risk discussed above with potentially having cells discarded ungracefully.

Using the present invention, only the channels utilizing the highest amounts of buffer resources are forced to discard cells. Higher classes of service like CBR typically receive cells and they get sent out immediately, while lower classes of service get pushed back and have to wait for available bandwidth. Waiting for bandwidth (or other functions provided by the network node) causes buffers associated with the lower classes of service to accumulate more cell pointers. The lower classes of service will then be the first to be forced to discard cells, prior to affecting the CBR channels which will have relatively fewer pointers in a queue/buffer at any given time.

Therefore, it is more efficient to oversubscribe the UBR traffic, because by overbooking the fabric, relying on the fact that not all CBR's are going to utilize their bandwidth all at once. However, during high traffic times when more CBR's are likely to need their bandwidth, the system resources will begin to be depleted, and UBR traffic will not be able to dominate the memory utilized from the cell memory because as system resources are depleted the maximum buffer sizes will be cut down and the UBR's will be required to discard cells.

The present invention may be conveniently implemented using a conventional general purpose or a specialized digital computer or microprocessor programmed according to the teachings of the present disclosure, as will be apparent to those skilled in the computer art.

Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium (media) having instructions stored thereon/in which can be used to control, or cause, a computer to perform any of the processes of the present invention. The storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), RAID devices, remote data storage/archive/warehousing, or any type of media or device suitable for storing instructions and/or data.

Stored on any one of the computer readable medium (media), the present invention includes software for controlling both the hardware of the general purpose/specialized computer or microprocessor, and for enabling the computer or microprocessor to interact with a human user or other mechanism utilizing the results of the present invention. Such software may include, but is not limited to, device drivers, operating systems, and user applications. Ultimately, such computer readable media further includes software for performing the present invention, as described above.

Included in the programming (software) of the general/specialized computer or microprocessor are software modules for implementing the teachings of the present invention, including, but not limited to, creating and maintaining lists and other data structures, buffering incoming network node data, maintaining thresholds, comparing thresholds against memory available for buffering, setting maximum buffer sizes, and discarding buffer locations above any maximum buffer sizes set according to the processes of the present invention.

Obviously, numerous modifications and variations of the present invention are possible in light of the above teachings. It is therefore to be understood that within the scope of the appended claims, the invention may be practiced otherwise than as specifically described herein.

## Claims

1. An apparatus for managing buffers in a multiple channel node of a communications network, comprising:
a memory pool comprising plural memory locations configured to store cells transmitted across said communications network;
a set of buffers constructed from memory locations allocated from said memory pool;
a buffer size device configured to maintain each buffer at a size less than a maximum buffer threshold value; and
a threshold setting mechanism configured to set said maximum threshold value based on an amount of unused memory locations in said memory pool.

2. The apparatus according to Claim 1, wherein said threshold setting mechanism comprises a set of at least one free list threshold, an amount of unused memory in said memory pool and corresponding to an adjustment in said maximum threshold; and
a trigger mechanism configured to recognize when an amount of unused memory in said memory pool matches one of said free list thresholds and makes an adjustment to said maximum threshold value corresponding to the matched free list threshold.

3. The apparatus according to Claim 1, wherein said maximum threshold value represents an oversubscription of said memory pool.

4. The apparatus according to Claim 2, wherein a list of said free list thresholds that represents a lowest amount of unused memory locations in said memory pool compared to other of said free list thresholds has a corresponding adjustment such that said buffers do not oversubscribe to said memory pool.

5. The apparatus according to Claim 4, wherein each of said other freelist thresholds have corresponding adjustments in maximum threshold such that said buffers oversubscribe to said memory pool.

6. The apparatus according to Claim 2, wherein each adjustment in maximum threshold from a highest maximum threshold to a lowest cuts a previous maximum threshold in half.

7. A method of managing memory space available to a set of buffers, comprising the steps of:
setting a maximum buffer size that indicates a maximum amount of memory that may be utilized by each of said buffers wherein said maximum threshold, when applied across each buffer, represents an oversubscription of a memory pool available for use by said buffers;
monitoring an amount of available memory in said memory pool; and
reducing said maximum buffer size if the amount of available memory in said memory pool drops below a predetermined threshold.

8. The method according to Claim 7, further comprising the step of:
returning memory locations from each of said buffers using more memory than said maximum buffer size to said memory pool.

9. The method according to Claim 7, wherein said step of returning includes the step of:
selecting the memory locations to be returned to said memory;
wherein the step of returning results in data being dropped from said buffers.

10. The method according to Claim 7, further comprising the step of restoring said maximum buffer size after the amount of available memory in said memory pool increases beyond said predetermined threshold.

11. The method according to Claim 10, wherein said steps of reducing and increasing are performed based on a hysteresis including said predetermined freelist threshold as a trigger for said reducing step and an amount above said predetermined freelist threshold as a trigger for said increasing step.

12. The method according to Claim 7, further comprising the step of increasing said maximum buffer size if the amount of available memory in said memory pool increases to a predetermined second threshold.

13. The method according to Claim 7, wherein:
said predetermined threshold comprises a set of N predetermined thresholds; and
said step of reducing comprises the step of:
reducing said maximum buffer size each time the amount of available memory space falls below any of said N predetermined threshold.

14. The method according to Claim 13, further comprising the step of:
increasing said maximum buffer size each time the amount of available memory in said memory pool increases to any of a second set of predetermined thresholds.

15. The method according to Claim 13, further comprising the step of:
restoring said maximum buffer size, to a value held by said maximum buffer size when said memory pool held an amount of available memory equivalent to a specific one of said predetermined thresholds, when the amount of available memory in said memory pool increases to the specific one of said thresholds.

16. The method according to Claim 7, wherein:
said predetermined threshold comprises a set of predetermined thresholds; and
said step of reducing comprises the step of reducing said maximum buffer size by ½ each time the amount of available memory in said memory pool drops below any one of said predetermined thresholds.

17. The method according to Claim 16, wherein said maximum buffer size is initially set to a value such that each of said maximum buffer sizes represents oversubscriptions of said memory pool, except for last maximum buffer size which is equivalent to one of a full subscription and an under subscription of said memory pool.
